## Europäisches Patentamt

## European Patent Office

## Office européen des brevets

(11) Veröffentlichungsnummer: **0 172 943**
**B1**

(12) **EUROPÄISCHE PATENTSCHRIFT**

(45) Veröffentlichungstag der Patentschrift:
**01.03.89**

(21) Anmeldenummer: **84116137.5**

(22) Anmeldetag: **21.12.84**

(51) Int. Cl.⁴: **G 01 L 1/22,** G 01 B 7/20,
H 01 C 10/10, H 01 C 7/00

(54) **DehnungsmeBstreifen.**

(30) Priorität: **24.08.84 DE 3431114**

(43) Veröffentlichungstag der Anmeldung:
**05.03.86 Patentblatt 86/10**

(45) Bekanntmachung des Hinweises auf die Patenterteilung:
**01.03.89 Patentblatt 89/9**

(84) Benannte Vertragsstaaten:
**CH DE FR GB LI NL**

(56) Entgegenhaltungen:
**DE-A- 1 490 581**
**DE-A- 1 925 921**
**FR-A- 2 393 410**
**US-A- 3 479 739**

**MICROELECTRONICS AND RELIABILITY, Band 3, 1964,
Seiten 227-232, Pergamon Press, Oxford, GB; D.F.A.
MACLACHLAN: "Evaporated film strain gauges for
high-temperature applications"**

(73) Patentinhaber: **VDO Adolf Schindling AG,
Gräfstrasse 103, D-6000 Frankfurt/Main (DE)**

(72) Erfinder: **Adamitzki, Wolfgang, Dipl.-Phys., Bad Sodener
Strasse 18, D-6231 Sulzbach (DE)**

(74) Vertreter: **Klein, Thomas, Dipl.-Ing. (FH), Sodener
Strasse 9 Postfach 6140, D-6231 Schwalbach a. Ts. (DE)**

## Beschreibung

Die Erfindung betrifft einen Dehnungsmeßstreifen mit einer metallischen Widerstandsschicht und dieser zugeordneten Kontaktschichten, die auf einen Träger aufgebracht sind.

Bei derartigen als Dehnungsmeßstreifen verwendbaren Widerständen ist es bekannt, eine metallische Widerstandsschicht auf einen Träger aufzubringen. Damit lassen sich Empfindlichkeiten des Dehnungsmeßstreifens mit einem K-Faktor von maximal etwa 5 erreichen.

Dehnungsmeßstreifen mit einem K-Faktor in dieser Größenordnung erfordern aber einen großen Aufwand bei der ihm nachgeschalteten Meßeinrichtung. Darüber hinaus ist keine große Auflösung der Messung möglich.

Aus «Microelectronics and Reliability», Band 3, 1964, Seiten 227-232 ist eine Widerstandsschicht bekannt, die auf ihren beiden Seiten mit Schutzschichten aus Siliziummonoxid versehen sind, wobei diese drei Schichten ein Sandwich ergeben. Die Siliziummonoxidschichten dienen zum Schutz der Widerstandsschicht gegen Umgebungseinflüsse.

Aus der EP-A-0 079 585 ist ein Verfahren zur Herstellung eines Widerstandes bekannt, bei dem Widerstandsschichten mittels Sputtern auf einen Träger aufgebracht werden.

Weiterhin ist aus der DE-A-1 490 851 ein Widerstand bekannt, der abwechselnd aus Widerstandsschichten und Glasurschichten besteht. Die Glasurschichten haben die Aufgabe, eine Seite Haftung der Schichtwiderstände zu gewährleisten.

Aufgabe der Erfindung ist es daher, einen Widerstand nach dem Oberbegriff zu schaffen, der eine erhöhte Empfindlichkeit aufweist.

Diese Aufgabe wird erfindungsgemäss dadurch gelöst, daß auf dem Träger mehrere übereinanderliegende metallische Widerstandsschichten aufgebracht sind, zwischen denen jeweils eine teilleitfähige Schicht angeordnet ist, wobei die Teilleitfähigkeit durch eine sehr geringe Dicke oder durch bewußt zugelassene Verunreinigungen der Schicht erreicht wird.

Dies führt zu einer gegenseitigen elektrischen Beeinflussung der Widerstandsschichten, wodurch in Abhängigkeit von der Anzahl der Schichten eine wesentliche Erhöhung des K-Faktors über den Wert 5 hinaus bis zu K-Faktoren zwischen 10 und 15 erreicht werden.

Um Beeinträchtigungen zu vermeiden, die vom Träger ausgehen können, wenn dieser z.B. leitend ist, kann zwischen dem Träger und der ihm nächsten metallischen Widerstandsschicht eine Isolationsschicht angeordnet sein.

Negative Einflüsse wie z.B. Korrosion können an der dem Träger entferntesten metallischen Widerstandsschicht dadurch verhindert werden, dass sie auf ihrer dem Träger abgewandten Seite von einer Isolationsschicht bedeckt ist.

Eine geringe Temperaturabhängigkeit bis zu Temperaturen von etwa 150°C ist erreichbar, wenn die metallische Widerstandsschicht eine Chromschicht bzw. eine Chrom enthaltende Schicht ist.

Als Isolationsschichten und/oder als Schicht besonders geeignet sind Siliziumschichten bzw. Silizium enthaltende Schichten, wie z.B. Schichten aus Siliziumverbindungen.

Zum Erreichen einer guten Lötfähigkeit können die Kontaktschichten vorzugsweise Kupferschichten sein.

Besonders geeignete Verfahren zum Aufbringen der Widerstandsschichten und/oder der Isolationsschichten und/oder der Kontaktschichten und/oder der Schicht sind Sputtern und Aufdampfen.

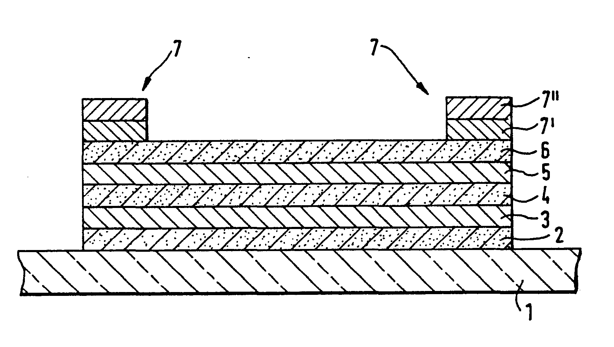

Ein Ausführungsbeispiel der Erfindung ist in der Zeichnung dargestellt und wird im folgenden näher beschrieben.

Die einzige Figur der Zeichnung zeigt einen erfindungsgemässen Widerstand im Querschnitt.

Der dargestellte Widerstand weist einen Träger 1 auf, der beispielsweise aus Glas bestehen kann. Auf diesen Träger 1 ist sandwichartig eine erste Isolationsschicht 2, eine erste Widerstandsschicht 3, eine zweite Schicht 4, eine zweite Widerstandsschicht 5 und eine dritte Isolationsschicht 6 z.B. durch Sputtern aufgebracht.

Auf beiden Enden der dritten Isolationsschicht 6 sind ausserdem Kontaktschichten 7 aufgebracht, die als Lötstellen zum Anschliessen des Widerstandes an eine Meßschaltung dienen.

Es versteht sich, dass die wechselweise Anzahl von Isolationsschichten und Widerstandsschichten zur Erhöhung des K-Faktors noch erhöht werden kann.

Die Widerstandsschichten bestehen dabei aus Chrom, während die Isolationsschichten aus Siliziummonoxid oder Siliziumdioxid bestehen können.

Die Kontaktschichten 7 bestehen aus einer auf die Isolationsschicht 6 aufgebrachten Chromschicht 7', die wiederum eine Kupferschicht 7'' trägt.

## Patentansprüche

1. Dehnungsmeßstreifen mit einer metallischen Widerstandsschicht und dieser zugeordneten Kontaktschichten, die auf einen Träger aufgebracht sind, dadurch gekennzeichnet, daß auf dem Träger (1) mehrere übereinanderliegende metallische Widerstandsschichten (3, 5) aufgebracht sind, zwischen denen jeweils eine teilleitfähige Schicht (4) angeordnet ist, wobei die Teilleitfähigkeit durch eine sehr geringe Dicke oder durch bewußt zugelassene Verunreinigungen der Schicht (4) erreicht werden.

2. Dehnungsmeßstreifen nach Anspruch 1, dadurch gekennzeichnet, daß zwischen dem Träger (1) und der ihm nächsten metallischen Widerstandsschicht (3) eine Isolationsschicht (2) angeordnet ist.

3. Dehnungsmeßstreifen nach einem der vorhergehenden Ansprüche, dadurch gekennzeichnet, daß die dem Träger (1) entfernteste metallische Widerstandsschicht (5) auf ihrer dem Träger (1) abgewandten Seite von einer Isolationsschicht (6) bedeckt ist.

4. Dehnungsmeßstreifen nach einem der vorhergehenden Ansprüche, dadurch gekennzeichnet, daß die metallische Widerstandsschicht (3, 5) eine Chromschicht bzw. eine Chrom enthaltende Schicht ist.

5. Dehnungsmeßstreifen nach einem der vorhergehenden Ansprüche, dadurch gekennzeichnet, daß die Isolationsschichten (2, 6) und/oder die Schicht (4) Schichten aus Silizium-Verbindungen sind.

6. Dehnungsmeßstreifen nach einem der vorhergehenden Ansprüche, dadurch gekennzeichnet, daß die Kontaktschichten (7) Kupferschichten sind.

7. Dehnungsmeßstreifen nach einem der vorhergehenden Ansprüche, dadurch gekennzeichnet, daß die Widerstandsschichten (3, 5) und/oder die Isolationsschichten (2, 6) und/oder die Kontaktschichten (7) und/oder die Schicht (4) durch Sputtern aufgebracht sind.

8. Dehnungsmeßstreifen nach einem der Ansprüche 1 bis 6, dadurch gekennzeichnet, daß die Widerstandsschichten (3, 5) und/oder die Isolationsschichten (2, 6) und/oder die Kontaktschichten (7) und/oder die Schicht (4) aufgedampft sind.

## Claims

1. Strain gauge having a metallic resistive layer and contact layers associated therewith, which are applied to a carrier, characterized in that there are applied to the carrier (1) a plurality of metallic resistive layers (3, 5) lying one above another, between which a partially conducting layer (4) is arranged in each case, the partial conductivity being achieved through a very small thickness, or through deliberately permitted impurities of the layer (4).

2. Strain gauge according to Claim 1, characterized in that an insulating layer (2) is arranged between the carrier (1) and the metallic resistive layer (3) nearest to it.

3. Strain gauge according to one of the preceding claims, characterized in that the metallic resistive layer (5) furthest removed from the carrier (1) is covered by an insulating layer (6) on its side facing away from the carrier (1).

4. Strain gauge according to one of the preceding claims, characterized in that the metallic resistive layer (3, 5) is a chrome layer or a layer containing chrome.

5. Strain gauge according to one of the preceding claims, characterized in that the insulating layers (2, 6) and/or the layer (4) are layers of silicon compounds.

6. Strain gauge according to one of the preceding claims, characterized in that the contact layers (7) are copper layers.

7. Strain gauge according to one of the preceding claims, characterized in that the resistive layers (3, 5) and/or the insulating layers (2, 6) and/or the contact layers (7) and/or the layer (4) are applied by sputtering.

8. Strain gauge according to one of the Claims 1 to 6, characterized in that the resistive layers (3, 5) and/or the insulating layers (2, 6) and/or the contact layers (7) and/or the layer (4) are vapour-deposited.

## Revendications

1. Jauge extensométrique ou de contraintes, comportant une couche résistante métallique et des couches de contact associées à celle-ci, qui sont déposées sur un support, jauge caractérisée en ce que, sur le support (1) sont déposées plusieurs couches résistantes (3, 5) métalliques superposées entre lesquelles est disposée, dans chaque cas, une couche (4) semi-conductrice, la semi-conductibilité étant obtenue au moyen d'une épaisseur très réduite ou bien au moyen d'impuretés laissées volontairement dans la couche (4).

2. Jauge extensométrique selon la revendication 1, caractérisée en ce qu'entre le support (1) et la couche résistante (3) métallique la plus proche, est disposée une couche isolante (2).

3. Jauge extensométrique selon une des revendications précédentes, caractérisée en ce que la couche résistante (5) métallique la plus éloignée du support (1) est recouverte d'une couche isolante (6) sur sa face située à l'opposé du support (1).

4. Jauge extensométrique selon une des revendications précédentes, caractérisée en ce que la couche résistante (3, 5) métallique est une couche de chrome.

5. Jauge extensométrique selon une des revendications précédentes, caractérisée en ce que les couches isolantes (2, 6) et/ou la couche (4) sont des couches de composés de silicium.

6. Jauge extensométrique selon une des revendications précédentes, caractérisée en ce que les couches (7) de contact sont des couches de cuivre.

7. Jauge extensométrique selon une des revendications précédentes, caractérisée en ce que les couches résistantes (3, 5) et/ou les couches isolantes (2, 6) et/ou les couches (7) de contact et/ou la couche (4) sont déposées par pulvérisation.

8. Jauge extensométrique selon une des revendications 1 à 6, caractérisée en ce que les couches résistantes (3, 5) et/ou les couches isolantes (2, 6) et/ou les couches (7) de contact et/ou la couche (4) sont obtenues par dépôt en phase vapeur.